# FASCICULE DE BREVET EUROPEEN

(11) **EP 0 838 361 B1**
(45) Date de publication et mention de la délivrance du brevet: **04.07.2001**
(21) Numéro de dépôt: 97402281.6
(22) Date de dépôt: 30.09.1997
(51) Int. Cl.: B60K 15/04, B60K 15/06, B65D 51/00

(54) **Dispositif de détection de la présence du bouchon d'un réservoir de carburant notamment de véhicule automobile**
Vorrichtung zur Erfassung der Anwesenheit eines Kraftstofftankdeckels, insbesondere für ein Kraftfahrzeug
Device for detecting the presence of a fuel tank cap especially for a motor vehicle

(30) Priorité: 22.10.1996 FR 9612830
(43) Date de publication de la demande: 29.04.1998
(73) Titulaire: AUTOMOBILES PEUGEOT, 75116 Paris (FR); AUTOMOBILES CITROEN, 92200 Neuilly-sur-Seine (FR)
(72) Inventeur: Burguburu, Philippe, 78000 Versailles (FR)
(74) Mandataire: Berger, Helmut

(56) Documents cités:
- EP-A- 0 044 654
- DE-A- 4 404 014
- FR-A- 2 323 553
- PATENT ABSTRACTS OF JAPAN vol. 007, no. 244 (M-252), 28 octobre 1983 & JP 58 131343 A (TOYOTA JIDOSHA KOGYO KK), 5 août 1983,
- PATENT ABSTRACTS OF JAPAN vol. 011, no. 370 (P-642), 3 décembre 1987 & JP 62 140030 A (HONDA MOTOR CO LTD), 23 juin 1987,

## Description

La présente invention concerne un dispositif de détection de la présence du bouchon d'un réservoir de carburant notamment de véhicule automobile, selon les caractéristiques du préambule de la revendication 1.

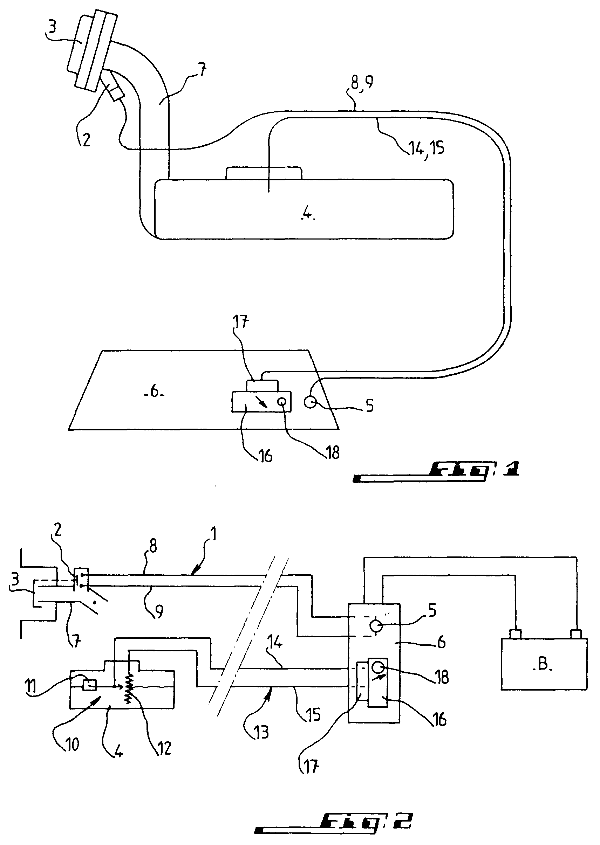

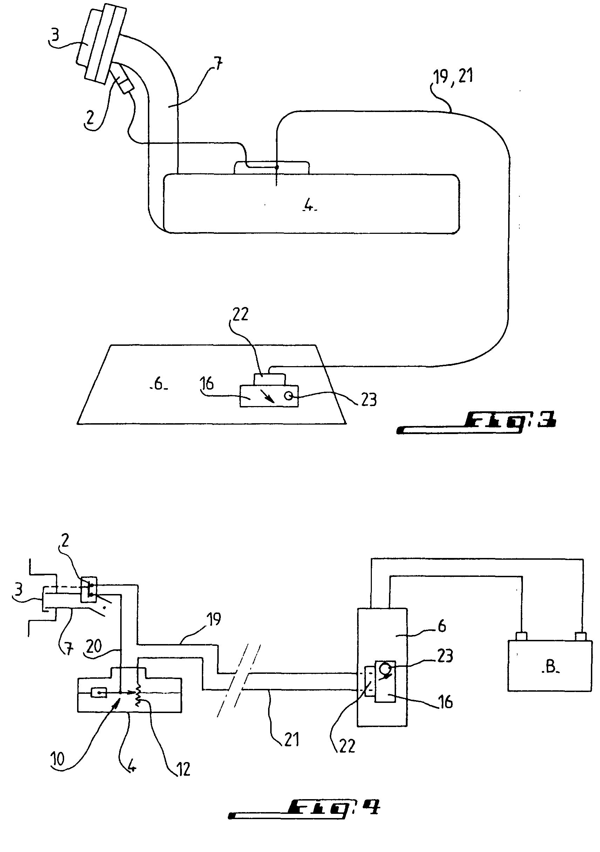

Les figures 1 et 2 représentent un dispositif connu permettant de vérifier si le bouchon de réservoir de carburant d'un véhicule automobile est présent ou absent ou mal remis en place sur le réservoir.

Un tel dispositif est connu par exemple de EP-A-044 654. Ce dispositif comprend un circuit électrique 1 à capteur 2 de détection de présence ou d'absence du bouchon 3 de fermeture du réservoir 4 de carburant du véhicule et permettant d'allumer une lampe de signalisation 5 du tableau de bord 6 du véhicule lorsque le capteur 2 détecte l'absence du bouchon 3 ou que celui-ci est mal remis en place sur la tubulure 7 de remplissage du réservoir 4. Le capteur 2 est du type à contact d'interrupteur disposé en série dans le circuit électrique 1 et occupant une position d'ouverture de ce circuit lorsque le bouchon 3 est présent et une position de fermeture du circuit lorsque le bouchon 3 est absent ou mal remis en place sur la tubulure 7. Le circuit électrique 1 est constitué d'un câble à fils conducteurs 8, 9 reliant le capteur 2 à la lampe de signalisation 5 de façon à alimenter, par une batterie B du véhicule, la lampe 5 lorsque le contact du capteur 2 est fermé.

Le réservoir 4 contient une jauge électrique 10 d'indication du niveau de carburant dans le réservoir et constituée par exemple, comme cela est schématiquement représenté en figure 2, par un flotteur 11 et une résistance électrique variable 12, dont la valeur de résistance change en fonction de la position du flotteur 11 dans le réservoir 4. La jauge 10 fait partie d'un circuit électrique 13 dont le câble à fils conducteurs 14, 15 relie la jauge 10 à un moyen indicateur 16 du niveau de carburant dans le réservoir 4 et situé au tableau de bord 6 du véhicule. Un circuit 17 de filtrage pour le signal électrique provenant de la jauge de niveau 10 est disposé entre les fils 14, 15 et le moyen indicateur de niveau 16. Une lampe 18 est également prévue sur le tableau de bord 6 du véhicule pour indiquer au conducteur du véhicule que le carburant dans le réservoir 4 est à un niveau minimum détecté par la jauge 10.

Comme cela ressort en particulier de la figure 1, ce dispositif connu a pour inconvénients de nécessiter une longueur très importante de fils 8, 9 du câble électrique reliant le capteur 2, situé au sommet de la tubulure 7, au tableau de bord 6 du véhicule et de disposer d'un emplacement approprié pour la lampe de signalisation 5 au niveau de ce tableau de bord, cette dernière exigence pouvant se révéler très coûteuse à satisfaire si elle n'a pas été prise en compte au moment de la réalisation du tableau de bord.

La présente invention a pour but d'éliminer les inconvénients ci-dessus du dispositif connu en proposant un dispositif de détection de la présence du bouchon d'un réservoir de carburant notamment de véhicule automobile, comprenant un circuit électrique à capteur changeant d'état lorsque le bouchon est absent ou n'est pas correctement remis en place de manière que le capteur commande un moyen de signalisation, tel qu'une lampe témoin, et qui est caractérisé en ce que le capteur est disposé en série avec la jauge électrique de niveau de carburant dans le réservoir de façon à commander également le moyen de signalisation lorsque la jauge indique un niveau minimal de carburant dans le réservoir.

Avantageusement, le circuit électrique est relié à un calculateur apte à déterminer si la valeur du signal qu'il reçoit est due à la jauge de carburant ou au changement d'état du capteur de présence du bouchon et à commander différemment le moyen de signalisation selon le signal reçu.

De préférence, le capteur de présence du bouchon est un interrupteur à contact normalement fermé en série avec la jauge électrique et occupant une position d'ouverture du circuit électrique lorsque le bouchon est absent du réservoir ou mal remis en place sur le réservoir.

Dans le cas où le moyen de signalisation est une lampe témoin du tableau de bord du véhicule automobile, le calculateur commande l'allumage permanent de la lampe témoin quand la jauge détecte le niveau minimal de carburant dans le réservoir et l'allumage de manière clignotante de celle-ci quand le capteur détecte l'absence du bouchon ou le défaut de remise en place de celui-ci sur le réservoir.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 représente un dispositif de détection de la présence du bouchon d'un réservoir de carburant de véhicule automobile conforme à l'art antérieur.

La figure 2 représente de manière plus détaillée les circuits électriques du dispositif de la figure 1 permettant de commander l'allumage des deux lampes de signalisation respectivement d'absence du bouchon de réservoir et de niveau minimal de carburant dans le réservoir du véhicule.

La figure 3 représente un dispositif de détection de la présence du bouchon d'un réservoir de carburant de véhicule automobile conforme à l'invention.

La figure 4 représente les circuits électriques du dispositif de la figure 3 permettant de commander une lampe unique de signalisation d'absence du bouchon de fermeture du réservoir de carburant et de niveau minimum de carburant dans ce réservoir.

En se reportant aux figures 3 et 4, le dispositif de détection de la présence du bouchon de réservoir de carburant de véhicule automobile conforme à l'invention comprend un capteur 2 de détection de présence du bouchon 3 de fermeture de la tubulure 7 de remplissage en carburant du réservoir 4 du véhicule. Le capteur 2 est monté au sommet de la tubulure de remplissage 7 et est constitué par un interrupteur à contact normalement fermé disposé en série avec la jauge 10 de niveau de carburant dans le réservoir 4, identique à la jauge 10 de la figure 2. Plus précisément, le capteur 2 est relié d'une part, par un fil conducteur 19, au tableau de bord 6 du véhicule et d'autre part, par un fil conducteur 20 au point milieu mobile de la résistance variable 12 de la jauge de niveau 10. La résistance variable 12 est reliée au tableau de bord 6 par l'intermédiaire d'un fil conducteur 21. Autrement dit, les deux circuits électriques permettant de signaler l'absence du bouchon 3 ou un défaut de remise en place de celui-ci et un niveau minimum de carburant dans le réservoir 4 sont reliés en série pour former un circuit électrique unique relié au moyen indicateur de niveau 16 du carburant par l'intermédiaire d'un calculateur 22, connu en soi, de filtrage pour le signal électrique provenant de la jauge de niveau 10.

Le calculateur 22 est apte à interpréter si la valeur du signal électrique qu'il reçoit est due à la jauge de niveau 10 ou au capteur 2 ayant changé d'état, dans le cas présent en passant de sa position normale de fermeture à sa position d'ouverture, pour commander l'allumage d'une lampe de signalisation unique commune 23 d'une manière différente selon le signal reçu par le calculateur 22. Ainsi, lorsque le capteur 2 est fermé comme représenté en figure 4, le calculateur 22 reçoit le signal électrique provenant de la jauge 10 et lorsque ce signal a une valeur représentative du niveau minimum de carburant dans le réservoir 4, le calculateur 22 commande l'allumage permanent de la lampe de signalisation 23. Lorsque le bouchon 3 est absent ou est mal remis en place sur la tubulure de remplissage 7 du réservoir 4, l'interrupteur à contact du capteur 2 est ouvert de sorte qu'aucun courant ne circule dans les fils électriques 19, 21 et le calculateur 22 commande alors l'allumage de manière clignotante de la lampe de signalisation 23, alertant ainsi le conducteur du véhicule d'une anomalie au niveau du bouchon 3.

Le dispositif ci-dessus décrit de l'invention est économique puisqu'il ne nécessite plus de lampe supplémentaire de signalisation de la présence ou de l'absence du bouchon du réservoir, la même lampe de signalisation étant utilisée pour cette fonction et celle relative à la détection du niveau minimum de carburant dans ce réservoir, et que la longueur de fil entre le capteur 2 et la jauge de niveau 10 est extrêmement réduite en comparaison à celle du fil reliant le capteur au tableau de bord du véhicule comme dans l'art antérieur.

## Revendications

1. Dispositif de détection de la présence du bouchon (3) d'un réservoir de carburant (4) notamment de véhicule automobile comprenant un circuit électrique à capteur (2) changeant d'état lorsque le bouchon (3) est absent ou n'est pas correctement remis en place de manière que le circuit électrique commande un moyen de signalisation, tel qu'une lampe témoin, caractérisé en ce que le capteur est disposé en série avec la jauge électrique (10) de niveau du carburant dans le réservoir (4) de façon à commander également le moyen de signalisation (23) lorsque la jauge (10) indique un niveau minimal de carburant dans le réservoir (4).

2. Dispositif selon la revendication 1, caractérisé en ce que le circuit électrique précité est relié à un calculateur (22) apte à déterminer si la valeur du signal qu'il reçoit est due à la jauge de carburant (10) ou au changement d'état du capteur (2) de présence du bouchon (3) et à commander différemment le moyen de signalisation (23) selon le signal reçu.

3. Dispositif selon la revendication 1 ou 2, caractérisé en ce que le capteur de présence du bouchon (3) est un interrupteur à contact (2) normalement fermé en série avec la jauge électrique (10) et occupant une position d'ouverture du circuit électrique lorsque le bouchon (3) est absent du réservoir ou mal remis en place sur le réservoir (4).

4. Dispositif selon la revendication 2 ou 3, caractérisé en ce que, lorsque le moyen de signalisation (23) est une lampe témoin du tableau de bord (6) du véhicule automobile, le calculateur (22) commande l'allumage permanent de la lampe témoin (23) quand la jauge (10) détecte le niveau minimal de carburant dans le réservoir (4) et l'allumage de manière clignotante de celle-ci quand le capteur (2) détecte l'absence du bouchon (3) ou de défaut de mise en place de celui-ci sur le réservoir (4).

## Patentansprüche

1. Vorrichtung zur Erfassung der Anwesenheit eines Kraftstofftank (4)-Deckels (3), insbesondere für ein Kraftfahrzeug, umfassend einen elektrischen Schaltkreis mit Sensor (2), der seinen Zustand ändert, wenn der Deckel (3) fehlt oder nicht derart ordnungsgemäß wieder angebracht ist, daß der elektrische Stromkreis ein Anzeigemittel wie zum Beispiel eine Kontrollampe steuert, dadurch gekennzeichnet, daß der Sensor mit dem elektrischen Maß (10) für das Niveau des Kraftstoffs im Tank (4) derart in Serie angeordnet ist, daß er ebenfalls das Anzeigemittel (23) steuert, wenn das Maß (10) ein Mindestniveau des Kraftstoffs im Tank (4) anzeigt.

2. Vorrichtung gemäß Anspruch 1, dadurch gekennzeichnet, daß der vorgenannte elektrische Stromkreis an einen Rechner (22) angeschlossen ist, der geeignet ist zu bestimmen, ob der Signalwert, den er empfängt, vom Kraftstoffmaß (10) oder von der Änderung des Zustandes des Sensors (2) zur Erfassung des Vorhandenseins des Deckels (3) herrührt und das Anzeigemittel (23) in Abhängigkeit des empfangenen Signals unterschiedlich zu steuern.

3. Vorrichtung gemäß Anspruch 1 oder 2, dadurch gekennzeichnet, daß der Sensor zur Erfassung des Vorhandenseins des Deckels (3) ein Kontaktschalter (2) ist, der normal in Serie mit dem elektrischen Maß (10) geschlossen ist und eine geöffnete Position des elektrischen Schaltkreises einnimmt, wenn der Deckel (3) auf dem Tank fehlt oder auf dem Tank (4) schlecht wieder angebracht ist.

4. Vorrichtung gemäß Anspruch 2 oder 3, dadurch gekennzeichnet, daß, wenn das Anzeigemittel (23) eine Kontrollampe des Armaturenbrettes (6) des Kraftfahrzeugs ist, der Rechner (22) die permanente Beleuchtung der Kontrollampe (23) steuert, wenn das Maß (10) das Mindestniveau des Kraftstoffs im Tank (4) erfaßt, und die blinkende Beleuchtung derselben, wenn der Sensor (2) das Fehlen des Deckels (3) oder ein fehlerhaftes Anbringen desselben auf dem Tank (4) erfaßt.

## Claims

1. Device for detecting presence of the cap (3) of a fuel tank (4) especially for a motor vehicle comprising an electrical circuit with a sensor (2) that changes of state when the cap (3) is lacking or is not correctly reset so that the electrical circuit controls a signalling means, such as an indicator lamp, characterized in that the sensor is serially arranged with the electrical gauge (10) that measures the fuel level in the tank (4) in order to also control the signalling means (23) when the gauge (10) indicates a minimum level of fuel in the tank (4).

2. Device according to claim 1, characterized in that the above mentioned electrical circuit is connected to a computer (22) able to determine whether the value of the signal that it receives is due to the fuel gauge (10) or to the change of state of the cap (3) presence sensor (2), and to control differently the signalling means (23) in accordance with the signal that is received.

3. Device according to claim 1 or 2, characterized in that the cap presence sensor (3) is a normally closed contact switch (2) in series with the electrical gauge (10) and occupying an opening position of the electrical circuit when the cap (3) is lacking from the tank or badly reset on the tank (4).

4. Device according to claim 2 or 3, characterized in that, when the signalling means (23) is an indicator lamp of the automobile vehicle dashboard (6), the computer (22) controls the permanent lighting of the indicator lamp (23) when the gauge (10) detects the minimum level of fuel in the tank (4) and the intermittent lighting of the same when the sensor (2) detects absence of the cap (3) or lack of positioning of the same on the tank (4).
